# EUROPÄISCHE PATENTANMELDUNG

(11) **EP 4 249 234 A1**
(43) Veröffentlichungstag der Anmeldung: **27.09.2023**
(21) Anmeldenummer: 22164159.0
(22) Anmeldetag: 24.03.2022
(51) Int. Cl.: B32B 7/02, E04B 1/80

(54) **MEHRSCHICHTDÄMMPLATTE**

(71) Anmelder: Dietrich Isol AG, 3700 Spiez (CH)
(72) Erfinder: Dietrich, Daniel, 3700 Spiez (CH)
(74) Vertreter: Hepp Wenger Ryffel AG

(57) **Zusammenfassung**

Die Erfindung betrifft eine Mehrschichtdämmplatte (1), enthaltend wenigstens eine Holzwolle- bzw. Holzspanschicht (2) mit Holzwollefasern bzw. Holzspänen, die durch ein insbesondere anorganisches Bindemittel zusammengehalten werden; und wenigstens eine Wärmedämmschicht (3), die einen Mineralschaum und/oder ein poröses mineralisches Material umfasst. Die Mehrschichtdämmplatte hat vorteilhafte Verarbeitungseigenschaften, ist leicht handhabbar und gut wiederverwertbar.

## Beschreibung

Die vorliegende Erfindung ist mit Mehrschichtdämmplatten befasst.

Mehrschichtdämmplatten werden bspw. zur Verkleidung und Wärmedämmung von Decken und Wänden verwendet. Häufig kommen Mehrschichtdämmplatten mit wenigstens einer Holzwolleschicht (häufig aus zementgebundener Holzwolle) und wenigstens einer Schicht aus einem Kunststoffmaterial, beispielsweise expandiertem Polystyrolschaum (EPS), zum Einsatz. Derartige Platten sind bspw. in EP 3 144 137 beschrieben. Sie haben eine recht hohe Druckfestigkeit. Befestigungsmittel wie beispielsweise Dübel oder Schrauben lassen sich nur schwer eindrücken, wodurch ein örtliches Eindrücken und dadurch ein Durchbiegen der Deckschicht und der ganzen Mehrschichtdämmplatte verhindert werden. Sie weisen ein geringes Gewicht auf und sind daher einfach und rationell zu verarbeiten. Aufgrund des Kunststoffmaterials sind sie jedoch für den Feuerschutz nicht ideal und können daher nicht für alle Anwendungen eingesetzt werden.

Auch im Hinblick auf die Wiederverwertbarkeit sind derartige Materialkombinationen von Nachteil, da eine Separierung des Kunststoffmaterials von der Holzwolleschicht nicht ohne Weiteres vollständig gelingt.

Ebenfalls bekannt sind Mehrschichtdämmplatten mit einer gebundenen Holzwolleschicht und einer Dämmschicht aus Mineralwolle (Steinwolle oder Glaswolle). Derartige Platten sind zwar aufgrund ihrer Nichtbrennbarkeit von Vorteil. Sie weisen jedoch ein vergleichsweise hohes Gewicht auf, und auch die punktuelle Druckfestigkeit ist nicht sehr ausgeprägt. Letzteres resultiert typischerweise zu Einsenkungen im Bereich der Befestigungspunkte und dadurch zum Durchbiegen der Deckschicht und der ganzen Mehrschichtdämmplatte.

Es ist eine Aufgabe der vorliegenden Erfindung, die vorgenannten Nachteile zu überwinden. Insbesondere ist es eine Aufgabe der vorliegenden Erfindung, eine Mehrschichtdämmplatte bereitzustellen, die möglichst optimiert ist im Hinblick auf die Wiederverwertbarkeit, die Feuerschutzeigenschaften, die Verarbeitungseigenschaften und die Ästhetik.

Eine erfindungsgemässe Mehrschichtdämmplatte umfasst wenigstens eine Holzwolle- oder Holzspanschicht mit Holzwollefasern bzw. Holzspänen, die durch ein insbesondere anorganisches Bindemittel zusammengehalten werden; und wenigstens eine Wärmedämmschicht, die einen Mineralschaum und/oder ein poröses mineralisches Material umfasst.

Als Holzwolle bzw. Holzwollefasern werden (üblicherweise speziell angefertigte) besonders lange, flexible und splitterarme Holzspäne bezeichnet. Im Rahmen der Erfindung werden Teile mit einer Länge von mindestens 7 cm und einer Dicke von nicht mehr als 3 mm als Holzwollefasern verstanden.

Die Holzwollefasern umfassen dabei insbesondere Fasern mit
i. einer Länge von mindestens 2,5 cm, mindestens 7 cm oder mindestens 10 cm; und/oder nicht mehr als 50 cm, nicht mehr als 30 cm oder nicht mehr als 20 cm; und/oder
ii. einer Breite von mindestens 0,5 mm oder mindestens 0,8 mm oder mindestens 1,0 mm oder mindestens 2,0 mm; und/oder nicht mehr als 10 mm, nicht mehr als 6 mm oder nicht mehr als 4 mm (wobei Bereiche von 0,5 bis 10 mm, bzw. von 0,8 bis 6 mm oder von 1,0 bis 4,0 mm bevorzugt sind); und/oder
iii. eine Dicke von mindestens 0,1 mm oder mindestens 0,3 oder mindestens 0,5 mm; und/oder nicht mehr als 3 mm oder nicht mehr als 2 mm oder nicht mehr als 1 mm.

Vorzugsweise sind überwiegend (d.h. mehr als 50 Gew.% des Holzes) Holzwollefasern mit diesen Dimensionen enthalten, besonders bevorzugt im Wesentlichen nur Holzwollefasern mit diesen Dimensionen enthalten.

Bei der Holzspanschicht, die durch ein insbesondere anorganisches Bindemittel zusammengehalten wird, kann es sich insbesondere um eine zementgebundene Spanplatte gemäss DIN EN 633 (Dezember 1993) handeln. Grundsätzlich sind jedoch alle Bindemittel wie hierin im Zusammenhang mit Holzwolleschichten beschrieben ebenso für Holzspanschichten verwendbar.

Mineralschaum und andere poröse mineralische Materialien sind im Stand der Technik zwar als solche bekannt. Sie finden als Baumaterialien breite Anwendung und sind bspw. als Gasbetonsteine oder Porenbeton bekannt. Bekannte Handelsnamen sind bspw. Multipor^{®} von Xella Geolyth^{®} Mineralschaum von der gleichnamigen Firma, oder AIRIUM von Lafarge Holcim. Diese Materialien sind jedoch relativ spröde und insbesondere an den Kanten und Ecken brüchig und punktuell wenig druckfest, wodurch es schwierig ist, die Platten ohne Beschädigungen (bspw. auch durch Fingereindrücke) zu montieren; darunter leidet die Ästhetik. In Kombination mit einer Holzwolle- bzw. Holzspanschicht kann dieser Nachteil jedoch ohne Weiteres kompensiert werden; die Holzwolle- bzw. Holzspanschicht schützt vor mechanischer Beschädigung sowohl während der Bauphase als auch danach. Auch zu hohe punktuelle Druckbelastungen werden durch die Holzwolle- bzw. Holzspanschicht vermieden, indem sie den Druck aufnimmt bzw. verteilt. So können die vorteilhaften Eigenschaften der porösen bzw. geschäumten mineralischen Materialien als Dämmschicht in Mehrschichtdämmplatten nutzbar gemacht werden.

Zudem ist die Wiederverwertbarkeit gegenüber Mehrschichtdämmplatten mit EPS Wärmedämmschicht verbessert, da keine Kunststoff-Verunreinigungen in das Rezyklat der Holzwolle/Späne bzw. des anorganischen Materials gelangen.

Zudem hat sich überraschend gezeigt, dass auch die Schallabsorption von erfindungsgemässen Mehrschichtdämmplatten gegenüber vergleichbaren Platten mit EPS Wärmedämmschicht verbessert ist.

In vorteilhaften Ausführungsformen besteht die Wärmedämmschicht im Wesentlichen aus Mineralschaum und/oder porösem mineralischem Material. Darunter wird verstanden, dass die Wärmedämmschicht mehr als 80 Gew.%, bevorzugt mehr als 85 Gew.%, weiter bevorzugt mehr als 90 Gew.%, besonders bevorzugt mehr als 95 Gew.% an Mineralschaum und/oder porösem mineralischem Material umfasst.

Die Dichte des Mineralschaums bzw. des porösen mineralischen Materials beträgt im Rahmen der Erfindung vorteilhaft zwischen 20 kg/³ und 200 kg/m³, vorzugsweise zwischen 20 kg/m³ und 140 kg/m³, besonders bevorzugt zwischen 30 kg/m³ und 80 kg/m³.

In weiteren Ausführungsformen ist der Mineralschaum und/der das poröse mineralische Material zementbasiert. Es kann sich dabei bspw. um geschäumten bzw. porösen Beton handeln; exemplarisch sei für derartige Materialien auf diejenigen verwiesen, die in EP 3 789 362 beschrieben bzw. auf die darin verwiesen wird (durch Bezugnahme hierin eingeschlossen). Materialien, die im Wesentlichen frei sind von Alkalisulfat und Erdalkalisulfat, sind hierbei bevorzugt. Ebenfalls geeignet ist Schaumglas, erhältlich bspw. unter dem Handelsnamen Foamglas^{®} von Owens Corning.

In weiteren bevorzugten Ausführungsformen ist der Mineralschaum und/oder das poröse mineralische Material erhalten aus einer Suspension von insbesondere anorganischen Partikeln und wenigstens einem Tensid, das die Oberfläche der insbesondere anorganischen Partikel hydrophobiert. Das Material wird bspw. aus einer Suspension durch Trocknung und ggf. anschliessende Sinterung erhalten. Derartige Materialien sind bekannt bspw. aus EP 3 818 027 bekannt, deren Offenbarung hierin durch Bezugnahme eingeschlossen wird.

Grundsätzlich sind als insbesondere anorganische Partikel in diesem Zusammenhang solche bevorzugt, die Geopolymere sind bzw. zur Ausbildung von Geopolymeren geeignet sind. Unter Geopolymeren werden anorganische Bindemittel auf Silikatbasis verstanden. Besonders bevorzugt sind Aluminosilikate und Kalziumsilikate. Exemplarische Zusammensetzungen, hierin durch Bezugnahme eingeschlossen, sind bspw. auch in WO 2011/106815 A1 beschrieben.

Die Holzwolle- bzw. Holzspanschicht hat in vorteilhaften Ausführungsformen eine Dicke im Bereich von 1 mm bis 60 mm, vorzugsweise von 2 mm bis 45 mm, weiter bevorzugt von 3 mm bis 30 mm, besonders bevorzugt von 5 mm bis 20 mm.

Die Wärmedämmschicht hat in vorteilhaften Ausführungsformen eine Dicke im Bereich von 10 mm bis 500 mm, vorzugsweise von 15 mm bis 400 mm, besonders bevorzugt von 20 mm bis 300 mm.

Die Holzwollefasern bzw. Holzspäne sind in vorteilhaften Ausführungsformen in einer unregelmässigen Geometrie angeordnet, wobei die Struktur der Holzwolle- bzw. Holzspanschicht eine Porosität von mehr als 30 Vol.%, vorzugsweise mehr als 40 Vol.%, weiter bevorzugt mehr als 50 Vol.% und besonders bevorzugt mehr als 60 Vol.% aufweist. Es hat sich erwiesen, dass hierdurch bereits eine besonders vorteilhafte Verteilung der Druckbelastung bewirkt werden kann. In hochverdichteten Holzwolle- bzw. Holzspanschichten kann im Rahmen der Erfindung auch eine geringere Porosität vorliegen.

In weiteren bevorzugten Ausführungsformen beträgt das Raumgewicht der Holzwolleschicht zwischen 200 kg/³ und 1'350 kg/m³, insbesondere zwischen 250 kg/m³ und 1'150 kg/m³, besonders bevorzugt zwischen 300 kg/m³ und 800 kg/m³.

In bevorzugten Ausführungsformen liegt das Raumgewicht der Holzspanschicht im Bereich von 800 bis 1'800 kg/m³, vorzugsweise von 900 bis 1'600 kg/m³, besonders bevorzugt von 1'000 bis 1'500 kg/m³.

Bei dem insbesondere anorganischen Bindemittel in der Holzwolle- bzw. Holzspanschicht handelt es sich in bevorzugten Ausführungsformen um Zement, Portlandzement, Weisszement, Grauzement, Tonerdezement, Magnesia, kaustisches Magnesia, ein Silikat, Gips (bspw. Naturgips oder REA Gips), Anhydrit, Ton, Lehm, Kaolin, oder eine Mischung davon. Mit solchen Bindemitteln hat sich insbesondere im Zusammenspiel mit den vorgenannten Porositäten eine besonders vorteilhafte Verteilung der Druckbelastung erzielen lassen.

Vorteilhafterweise beträgt die Menge des anorganischen Bindemittels in der Holzwolleschicht weniger als 90 Gew.%, vorzugsweise weniger als 80 Gew.%, weiter bevorzugt weniger als 70 Gew.%; besonders bevorzugt liegt die Menge des anorganischen Bindemittels in der Holzwolleschicht im Bereich von 50 Gew.% bis 70 Gew.%.

In weiteren bevorzugten Ausführungsformen liegt der Bindemittelgehalt der Holzspanschicht im Bereich von 50 bis 90 Gew.%, vorzugsweise von 60 bis 85 Gew.%, besonders bevorzugt von 70 bis 80 Gew.%.

In weiteren Ausführungsformen umfasst die Mehrschichtdämmplatte eine Verbindungsschicht, die jeweils zwischen der Holzwolle- bzw. Holzspanschicht und der Wärmedämmschicht angeordnet ist und an diese angrenzt, wobei das Material der Verbindungsschicht im Wesentlichen mineralisch ist. Hierfür können bspw. an sich bekannte mineralische Klebstoffe zur Anwendung kommen. Dies hat den Vorteil, dass - falls eine Verbindungsschicht vorhanden ist - diese die Wiederverwertbarkeit nicht beeinträchtigt, da sie den im Wesentlichen gleichen mineralischen Charakter der Wärmedämmschicht bzw. des Bindemittels der Holzwolle- bzw. Holzspanschicht hat. Aber auch die Verwendung von anderen Materialien in der Verbindungsschicht ist möglich. Als Materialien in der Verbindungsschicht sind Materialien ausgewählt aus der folgenden Gruppe möglich: Physikalisch abbindende Klebstoffe, insbesondere lösemittelhaltige Nassklebstoffe, Kontaktklebstoffe, Dispersionsklebstoffe, Schmelzklebstoffe, Plastisole; chemisch härtende Klebstoffe, insbesondere Polyadditionsklebstoffe, Polykondensationsklebstoffe, Polymerisationsklebstoffe; sowie Mischungen davon. Besonders bevorzugt sind derzeit Polyurethan-Klebstoffe, Weissleime und Schmelzklebstoffe.

Alternativ zu einer Verbindungsschicht ist es im Rahmen der Erfindung ebenso möglich, dass die Holzwolle- bzw. Holzspanschicht zumindest teilweise in der Wärmedämmschicht verankert ist. So kann die Verbindung der Schichten unmittelbar bewirkt sein. Das kann direkt bei der Herstellung der Wärmedämmschicht geschehen, indem bspw. vor Abschluss der Aushärtung des Schaums bzw. des porösen Materials die Holzwolle- bzw. Holzspanschicht von oben aufgebracht wird und daran angepresst bzw. partiell eingepresst wird. Ebenso ist es möglich, dass die Wärmedämmschicht in noch nicht ausgehärtetem Zustand auf die Holzwolle- bzw. Holzspanschicht von oben oder von der Seite aufgetragen wird und noch zumindest teilweile in die Holzwolle- bzw. Holzspanschicht hineinläuft.

Ein weiterer Aspekt der Erfindung betrifft ein Verfahren zur Herstellung einer Mehrschichtdämmplatte insbesondere wie hierin beschrieben, wobei eine Wärmedämmschicht, die einen Mineralschaum und/oder ein poröses mineralisches Material umfasst, derart mit einer Holzwolle- oder Holzspanschicht mit Holzwollefasern bzw. Holzspänen, die durch ein anorganisches Bindemittel zusammengehalten werden, verbunden wird, dass die Verbindung mittels einer insbesondere im Wesentlichen mineralischen Verbindungsschicht bewirkt wird; oder die Holzwolle- bzw. Holzspanschicht zumindest teilweise in der Wärmedämmschicht verankert wird; oder die Verbindung mit dem insbesondere anorganischen Bindemittel der Holzwolle- bzw. Holzspanschicht selbst bewirkt wird Ein weiterer Aspekt der Erfindung betrifft die Verwendung eines Mineralschaums und/oder eines porösen mineralischen Materials als Wärmedämmschicht in einer Mehrschichtdämmplatte, die insbesondere wenigstens eine Holzwolle- oder Holzspanschicht mit Holzwollefasern bzw. Holzspänen, die durch ein anorganisches Bindemittel zusammengehalten werden, umfasst. Eine solche Verwendung wurde im Stand der Technik noch nicht vorgeschlagen, und sie bringt die hierin diskutierten Vorteile mit sich.

Die Erfindung wird nachstehend anhand von Ausführungsbeispielen näher erläutert, wobei die Erfindung nicht auf diese Ausführungsbeispiele zu beschränken ist.

Es zeigen:
- Fig. 1: eine Mehrschichtdämmplatte (schematisch)
- Fig. 2: eine Mehrschichtdämmplatte mit Verbindungsschicht (schematisch)
- Fig. 3: eine Mehrschichtdämmplatte mit teilweiser Verankerung der Holzwolle- bzw. Holzspanschicht in der Wärmedämm-schicht (schematisch)

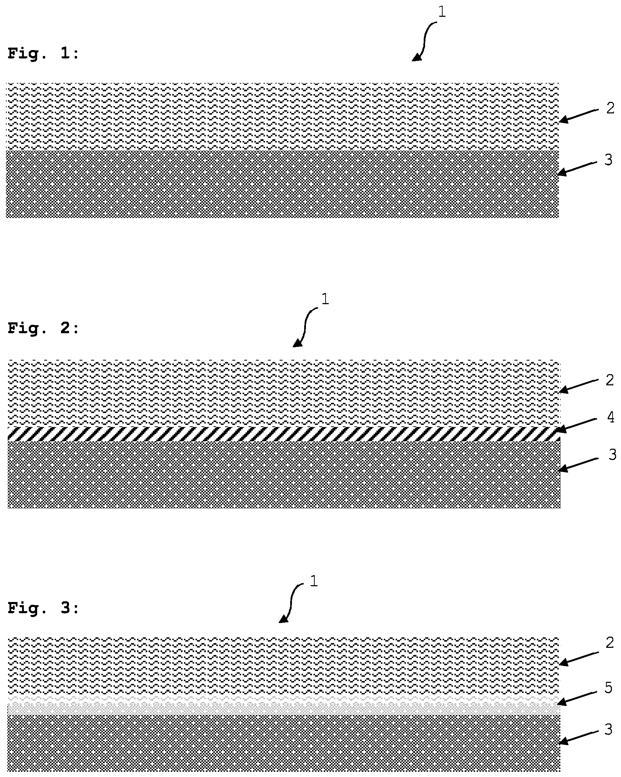

In Fig. 1 ist schematisch eine erfindungsgemässe Mehrschichtdämmplatte 1 illustriert im Querschnitt, wie vorstehend beschrieben. Sie umfasst eine Holzwolle- oder Holzspanschicht 2 und eine Wärmedämmschicht 3. Die Holzwolle- bzw. Holzspanschicht 2 umfasst Holzwollefasern bzw. Holzspäne, die durch ein anorganisches Bindemittel zusammengehalten werden. Die Wärmedämmschicht 3 umfasst einen Mineralschaum und/oder ein poröses mineralisches Material. Hier und auch in den weiteren gezeigten Ausführungsformen ist es selbstverständlich möglich, mindestens eine weitere Holzwolle- bzw. Holzspanschicht 2 insbesondere derart vorzusehen, dass die Wärmedämmschicht 3 beidseitig von Holzwolle- bzw. Holzspanschichten 2 bedeckt ist (nicht illustriert).

In Fig. 2 ist eine weitere erfindungsgemässe Mehrschichtdämmplatte 1 schematisch illustriert. In diesem Ausführungsbeispiel ist die Holzwolle- bzw. Holzspanschicht 2 mit einer Verbindungsschicht 4 an die Wärmedämmschicht angebunden. Die Verbindungsschicht 4 ist bspw. mineralischer Art und dient als Haftvermittler/Klebeschicht zwischen der anorganisch gebundenen Holzwolle- bzw. Holzspanschicht 2 und der mineralischen Wärmedämmschicht 3.

Fig. 3 illustriert schematisch eine weitere erfindungsgemässe Mehrschichtdämmplatte 1. In diesem Ausführungsbeispiel ist die Holzwolleschicht 2 in einem Bereich 5 teilweise in der Wärmedämmschicht 3 verankert. (Im Falle einer Holzspanschicht 2 haftet die Wärmedämmschicht 3 im Wesentlichen lediglich an der Oberfläche der Holzspanschicht 2 an.) Das kann vorteilhaft direkt bei der Herstellung der Wärmedämmschicht 3 geschehen, wenn diese noch nicht (vollständig) ausgehärtet ist und die Holzwolle- bzw. Holzspanschicht 2 noch zumindest teilweise in die Wärmedämmschicht 3 eingepresst bzw. an diese angedrückt werden kann; bzw. die Wärmedämmschicht 3 in noch nicht (vollständig) ausgehärtetem Zustand auf die Holzwolle- bzw. Holzspanschicht 2 seitlich oder von oben aufgetragen wird und noch zumindest teilweise in diese hineinlaufen kann.

## Patentansprüche

1. Mehrschichtdämmplatte (1), enthaltend wenigstens eine Holzwolle- oder Holzspanschicht (2) mit Holzwollefasern bzw. Holzspänen, die durch ein insbesondere anorganisches Bindemittel zusammengehalten werden; und wenigstens eine Wärmedämmschicht (3), die einen Mineralschaum und/oder ein poröses mineralisches Material umfasst.

2. Mehrschichtdämmplatte (1) gemäss Anspruch 1, **dadurch gekennzeichnet, dass** die Wärmedämmschicht (3) im Wesentlichen aus Mineralschaum und/oder porösem mineralischem Material besteht.

3. Mehrschichtdämmplatte (1) gemäss einem der Ansprüche 1 oder 2, **dadurch gekennzeichnet, dass** der Mineralschaum und/oder das poröse mineralische Material zementbasiert ist.

4. Mehrschichtplatte (1) gemäss einem Ansprüche 1 bis 3, **dadurch gekennzeichnet, dass** der Mineralschaum und/oder das poröse mineralische Material ausgewählt ist aus der Gruppe bestehend aus geschäumtem bzw. porösem Beton; Schaumglas.

5. Mehrschichtdämmplatte (1) gemäss einem der Ansprüche 1 bis 4, **dadurch gekennzeichnet, dass** der Mineralschaum und/oder das poröse mineralische Material im Wesentlichen frei ist von Alkalisulfat und Erdalkalisulfat.

6. Mehrschichtdämmplatte (1) gemäss einem der Ansprüche 1 oder 2, **dadurch gekennzeichnet, dass** der Mineralschaum und/oder das poröse mineralische Material erhalten ist aus einer Suspension von anorganischen Partikeln und wenigstens einem Tensid, das die Oberfläche der anorganischen Partikel hydrophobiert.

7. Mehrschichtdämmplatte (1) gemäss Anspruch 6, wobei der Mineralschaum und/oder das poröse mineralische Material aus der Suspension durch Trocknung, optional gefolgt durch Sinterung, erhalten ist.

8. Mehrschichtdämmplatte (1) gemäss einem der Ansprüche 6 oder 7, wobei die anorganischen Partikel ausgewählt sind aus der Gruppe der Geopolymere, insbesondere Aluminosilikate und Kalziumsilikate; sowie anorganische Partikel, die zur Ausbildung von Geopolymeren geeignet sind.

9. Mehrschichtdämmplatte (1) gemäss einem der Ansprüche 1 bis 8, **dadurch gekennzeichnet, dass** die wenigstens eine Holzwolle- oder Holzspanschicht (2) eine Dicke im Bereich von 1 mm bis 60 mm, vorzugsweise von 2 mm bis 45 mm, weiter bevorzugt von 3 mm bis 30 mm, besonders bevorzugt von 5 mm bis 20 mm aufweist.

10. Mehrschichtdämmplatte (1) gemäss einem der Ansprüche 1 bis 9, **dadurch gekennzeichnet, dass** die Wärmedämmschicht (3) eine Dicke im Bereich von 10 mm bis 500 mm, vorzugsweise von 15 mm bis 400 mm, besonders bevorzugt von 20 mm bis 300 mm aufweist.

11. Mehrschichtdämmplatte (1) gemäss einem der Ansprüche 1 bis 10, **dadurch gekennzeichnet, dass** es sich bei dem anorganischen Bindemittel um Zement, Portlandzement, Weisszement, Grauzement, Tonerdezement, Magnesia, kaustisches Magnesia, ein Silikat, Gips, Anhydrit, Ton, Lehm, Kaolin oder eine Mischung davon handelt.

12. Mehrschichtdämmplatte (1) gemäss einem der Ansprüche 1 bis 11, umfassend eine Verbindungsschicht (4), die zwischen der Holzwolle- bzw. Holzspanschicht (2) und der Wärmedämmschicht (3) angeordnet ist und an diese angrenzt.

13. Mehrschichtdämmplatte (1) gemäss einem der Ansprüche 1 bis 12, **dadurch gekennzeichnet, dass** die Holzwolle- bzw. Holzspanschicht (2) in einem Bereich (5) zumindest teilweise in der Wärmedämmschicht (3) verankert ist.

14. Verfahren zur Herstellung einer Mehrschichtdämmplatte, wobei eine Wärmedämmschicht (3), die einen Mineralschaum und/oder ein poröses mineralisches Material umfasst, derart mit einer Holzwolle- oder Holzspanschicht (2) mit Holzwollefasern bzw. Holzspänen, die durch ein insbesondere anorganisches Bindemittel zusammengehalten werden, verbunden wird, dass
- die Verbindung mittels einer Verbindungsschicht, insbesondere einer im Wesentlichen mineralischen Verbindungsschicht, bewirkt wird; oder
- die Holzwolleschicht (2) zumindest teilweise in der Wärmedämmschicht (3) verankert wird; oder
- die Verbindung mit dem insbesondere anorganischen Bindemittel der Holzwolle- oder Holzspanschicht (2) selbst bewirkt wird.

15. Verwendung eines Mineralschaums und/oder eines porösen mineralischen Materials als Wärmedämmschicht (3) in einer Mehrschichtdämmplatte (1), die insbesondere eine Holzwolleschicht (2) mit Holzwollefasern, die durch ein anorganisches Bindemittel zusammengehalten werden, umfasst.
